(19) **Europäisches Patentamt / European Patent Office / Office européen des brevets**

(11) **EP 2 228 882 A2**

(12) # EUROPEAN PATENT APPLICATION

(43) Date of publication:
**15.09.2010 Bulletin 2010/37**

(21) Application number: **10154135.7**

(22) Date of filing: **19.02.2010**

(51) Int Cl.:
$H02J\ 7/00^{(2006.01)}$     $B60L\ 11/18^{(2006.01)}$

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **11.03.2009 JP 2009058237**

(71) Applicant: **OMRON Automotive Electronics Co., Ltd.**
**Komaki, Aichi 485-0802 (JP)**

(72) Inventors:
• **Hirobe, Naoki**
**Kyoto-shi, Kyoto 600-8530 (JP)**
• **Nagayama, Keiichi**
**Kyoto-shi, Kyoto 600-8530 (JP)**
• **Sueyasu, Hiroyuki**
**Kyoto-shi, Kyoto 600-8530 (JP)**
• **Ido, Yusaku**
**Kyoto-shi, Kyoto 600-8530 (JP)**
• **Hachiya, Koji**
**Kyoto-shi, Kyoto 600-8530 (JP)**
• **Nakao, Hiroshi**
**Kyoto-shi, Kyoto 600-8530 (JP)**

(74) Representative: **Wilhelms · Kilian & Partner Patentanwälte**
**Eduard-Schmid-Straße 2**
**81541 München (DE)**

(54) **Charging control device and method, charging device, as well as, program**

(57) To charge a battery of an electric vehicle more appropriately according to the state of an ARC power supply. A maximum charging power We, a power WHd necessary for charging a high voltage battery (26), and a power WLd necessary for charging a low voltage battery (33) are calculated based on an input voltage from a commercial power supply (12) used to charge an electric vehicle and a maximum input current. A charging stop mode is set if both batteries (26, 33) are fully charged, a low voltage battery charging mode is set if WHd ≤ Wc and only the high voltages battery (26) is fully charged or if WLd ≤ We < WHd and the low voltage battery (33) is not fully charged, a high voltage battery charging mode is set if WHd ≤ Wc and only the low voltage battery is fully charged, a transition charging mode is set if WHd ≤ Wc < WLd + WHd and both batteries (26, 33) are not fully charged, a simultaneous charging mode is set if INLd + WHd ≤ Wc and both batteries (26, 33) are not fully charged, and a charging abnormality mode is set if Wc < WLdb. The present invention can be applied to the charging device of an electric vehicle.

FIG. 1

EP 2 228 882 A2

**Description**

BACKGROUND OF THE INVENTION

1. TECHNICAL FIELD

The present invention is related to a charging control device and method, charging device, as well as program, and in particular, to a charging control device and method, a charging device, as well as, a program suitably used to charge a battery of an electric vehicle.

2. RELATED ART

Conventionally, proposal is made to convert a high voltage power from a charger for charging a high voltage battery to a low voltage power by a DC/DC converter, and charge a low voltage battery for supplying power to an electric device of a vehicle that operates at low voltage while charging the high voltage battery, which is a power source of an electric vehicle (see e.g., Japanese Unexamined Patent Publication No. 7-15807).

SUMMARY

If the low voltage battery is not fully charged, overcurrent may flow to the low voltage battery when starting the charging. Furthermore, the power is sometimes supplied to a load of an ECU (Electronic Control Unit), an actuator, and the like, which operate at low voltage, while charging the high voltage battery and the low voltage battery depending on the state of the electric vehicle.
Thus, when charging the high voltage battery and the low voltage battery of the electric vehicle with a commercial power supply, power of greater than or equal to a rated power of the commercial power supply is necessary due to the fluctuation of the charging current of the low voltage battery and the fluctuation of the load of low voltage, whereby a breaker of a power switchboard in a household trips and other electronic products may stop.
The present invention has been devised to solve the problems described above, and an object thereof is to enable the charging of the battery of an electric vehicle to be performed more appropriately according to the state of an AC (Alternating Current) power supply used for charging.

BRIEF DESCRIPTION OF THE DRAWINGS

Fig. 1 is a block diagram showing one embodiment of an in-vehicle charging system applying the present invention;
Fig. 2 is a block diagram showing one example of a functional configuration of an in-vehicle charger;
Fig. 3 is a flowchart describing a charging control process executed by the in-vehicle charging system;
Fig. 4 is a flowchart describing a charging control process executed by the in-vehicle charging system;
Fig. 5 is a flowchart describing a charging control process executed by the in-vehicle charging system;
Fig. 6 is a view describing the parameters related to the in-vehicle charging system; and
Fig. 7 is a view describing the method of setting the charging mode.

DETAILED DESCRIPTION

Hereinafter, preferred embodiments of the present invention will be described with reference to the drawings.

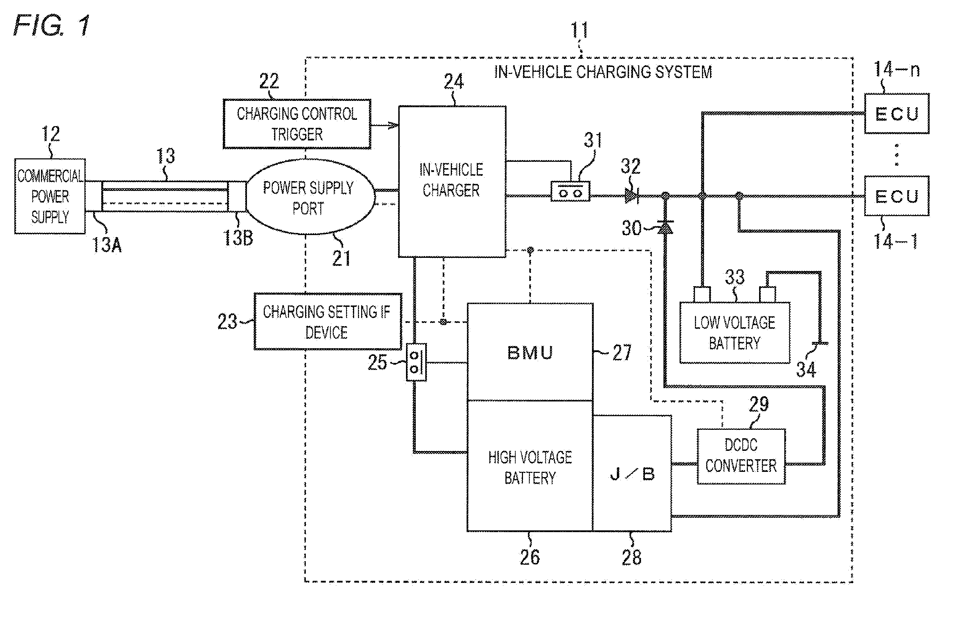

Fig. 1 is a block diagram showing one embodiment of an in-vehicle charging system applying the present invention. In the figure, the power line of the alternating current and the direct current is indicated with a thick solid line, the communication line and the signal line are indicated with a thin solid line, and a control line is indicated with a thin dotted line.
The in-vehicle charging system 11 of Fig. 1 is a system for charging an electric vehicle that travels using power accumulated in a battery such as an EV (Electric Vehicle) and a PHEV (Plugin Hybrid Electric Vehicle). A vehicle including the in-vehicle charging system 11 is hereinafter referred to as self-vehicle.
The in-vehicle charging system 11 is configured to includes a power supply port 21, a charging control trigger 22, an in-vehicle charger 24, a connection relay 25, a high voltage battery 26, a BMU (Battery Management Unit) 27, a J/B (Junction Box) 28, a DCDC converter 29, a diode 30, a connection relay 31 , a diode 32, a low voltage battery 33, and a body earth 34.
The in-vehicle charging system 11 is connected to a commercial power supply 12 by way of a cable 13. More specifically, a plug 13A of the cable 13 is connected to the commercial power supply 12, and a plug 13B of the cable 13 is connected to the power supply port 21 arranged on the outer side of the self-vehicle. The AC power (hereinafter also referred to as input power) from the commercial power supply 12 is then supplied to the in-vehicle charger 24 through the cable 13 and the power supply port 21.

The charging control trigger 22 is configured by an operation means such as various types of buttons, switches, and a remote controller. The user inputs commands to start and stop the charging of the high voltage battery 26 to the in-vehicle charger 24 through the charging control trigger 22.

A charging setting IF device 23 is configured by an operation means such as various types of buttons and switches, a display means such as an LCD (Liquid Crystal Display), and the like. The user inputs information necessary for the charging of the high voltage battery 26 and the low voltage battery 33 through the charging setting IF device 23. Such information includes a parameter necessary for creating a charging sequence that defines the transition of the charging voltage and the charging current of the high voltage battery 26, AC power supply information or information related to the commercial power supply 12, and the like. The AC power supply information includes at least one of the input voltage input from the commercial power supply 12 to the in-vehicle charging system 11 or the location (e.g., country name, regional name) of the commercial power supply 12, as well as, a maximum input current or an upper limit of the current input from the commercial power supply 12 to the in-vehicle charging system 11.

The in-vehicle charger 24 charges the high voltage battery 26 and the low voltage battery 33 according to the command input from the charging control trigger 22. Specifically, the in-vehicle charger 24 converts the input power to a direct current (DC) power, and generates power for charging of the high voltage battery 26 and the low voltage battery 33. The in-vehicle charger 24 supplies the generated DC power to the high voltage battery 26 through the connection relay 25, and supplies the generated DC power to the low voltage battery 33 through the connection relay 31 and the diode 32 so that the high voltage battery 26 and the low voltage battery 33 can be simultaneously charged. The in-vehicle charger 24 converts the input power to the DC power, and supplies power to an electric component (hereinafter also referred to as low voltage component) of the self-vehicle that operates at low voltage such as ECUs (Electronic Control Units) 14-1 to 14-n through the connection relay 31 and the diode 32. If the ECUs 14-1 to 14-n do not need to be individually distinguished, they are simply referred to as the ECU 14.

The in-vehicle charger 24 also controls ON or OFF of the connection relay 31. Furthermore, the in-vehicle charger 24 performs operation diagnosis of the BMU 27 and the DCDC converter 29.

The connection relay 25 is turned ON or OFF based on the control of the BMU 27, and switches the supply of power from the in-vehicle charger 24 to the high voltage battery 26.

The power accumulated in the high voltage battery 26 is supplied to an inverter (not shown) through the J/B 28, and converted from DC to AC. The AC power is supplied to a motor (not shown) to drive the motor, so that the self-vehicle travels. The power accumulated in the high voltage battery 26 is also supplied to the DCDC converter 29 through the J/B 28.

The BMU 27 is a device for managing the high voltage battery 26. For instance, the BMU 27 monitors the state (e.g., voltage, current, temperature, etc.) of the high voltage battery 26, and provides the information indicating the monitoring result to the in-vehicle charger 24. The BMU 27 operates by the power of the low voltage battery 33, and stops the operation when the voltage of the low voltage battery 33 becomes smaller than or equal to a predetermined voltage.

The J/B 28 incorporates a contactor, a relay, a current sensor, a current leakage sensor, and the like. The J/B 28 distributes the power accumulated in the high voltage battery 26 to the DCDC converter 29, the inverter (not shown), and the like, and also monitors the output of the high voltage battery 26. The J/B 28 operates by the power of the low voltage battery 33, and stops the operation when the voltage of the low voltage battery 33 becomes smaller than or equal to a predetermined voltage.

The DCDC converter 29 converts the voltage of the power supplied from the high voltage battery 26 through the J/B 28 to a predetermined voltage, and supplies the low voltage battery 33 through the diode 30. The low voltage battery 33 thus can be charged. The DCDC converter 29 also converts the voltage of the power supplied from the high voltage battery 26 through the J/B 28 to a predetermined voltage, and supplies the low voltage components such as the ECU 14 through the diode 30.

If the J/B 28 is not operating due to lowering of the voltage of the low voltage battery 33, and the like, the DCDC converter 29 stops the operation since the power supply from the high voltage battery 26 stops. In other words, the power supply from the high voltage battery 26 to the low voltage battery 33 and the ECU 14 through the DCDC converter 29 is controlled using the power of the low voltage battery 33.

The diode 30 is arranged to prevent the current output from the in-vehicle charger 24 from flowing to the DCDC converter 29.

The connection relay 31 is turned ON or OFF based on the control of the in-vehicle charger 24, and switches the supply of power from the in-vehicle charger 24 to the low voltage battery 33.

The diode 32 is arranged to prevent the current output from the DCDC converter 29 from flowing to the in-vehicle charger 24.

The low voltage battery 33 is charged by the power supplied from the in-vehicle charger 24 through the connection relay 31 and the diode 32, or the power supplied from the high voltage battery 26 through the J/B 28, the DCDC converter 29, and the diode 30. The power accumulated in the low voltage battery 33 is supplied to the low voltage component such as the ECU 14. The low voltage battery 33 is connected to the body earth 34.

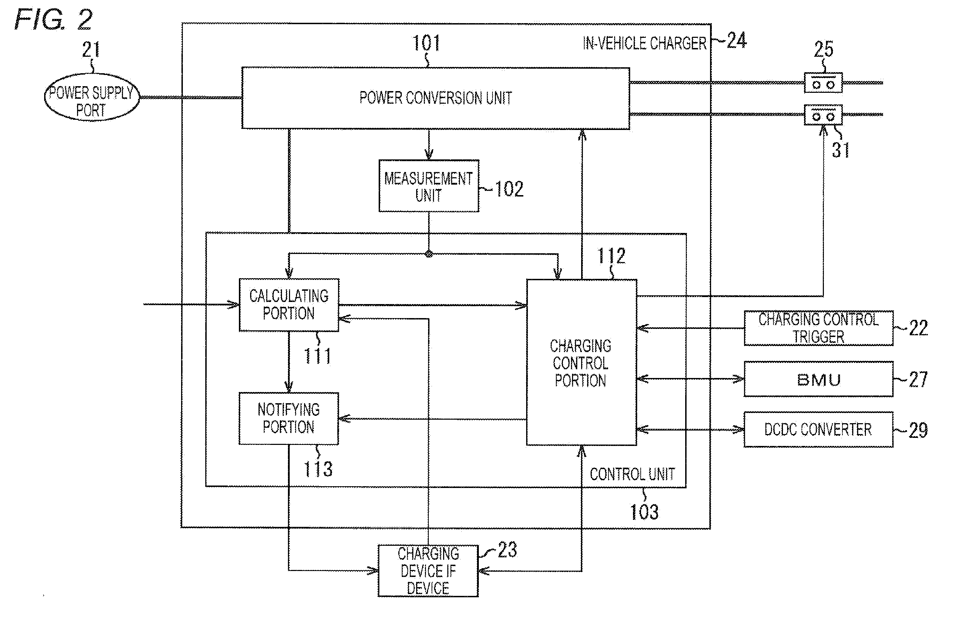

Fig. 2 is a block diagram showing one example of a functional configuration of the in-vehicle charger 24. The in-vehicle charger 24 is configured to include a power conversion unit 101, a measurement unit 102, and a control unit 103. The control unit 103 is configured by a microcomputer, and implements the functions of a calculating portion 111, a charging control portion 112, and a notifying portion 113 by executing a predetermined control program.

The power conversion unit 101 is configured by a rectifier, a DCDC converter, and the like. The power conversion unit 101 rectifies the input power supplied from the commercial power supply 12 to the DC power based on the control of the charging control portion 112, and outputs to the high voltage battery 26, the low voltage battery 33, and the low voltage component such as the ECU 14 while controlling the voltage and the current of the DC power. The power conversion unit 101 converts the voltage of the DC power to a predetermined voltage, and supplies the converted voltage to the control unit 103 as a power supply for control.

The measurement unit 102 is configured by various types of measurement devices for measuring the voltage, the current, the temperature, and the like, and measures the input voltage, the input current, the output voltage, and the output current of the power conversion unit 101, the temperature of the in-vehicle charger 24 and the like. The measurement unit 102 provides the information indicating the measurement result to the calculating portion 111 and the charging control portion 112.

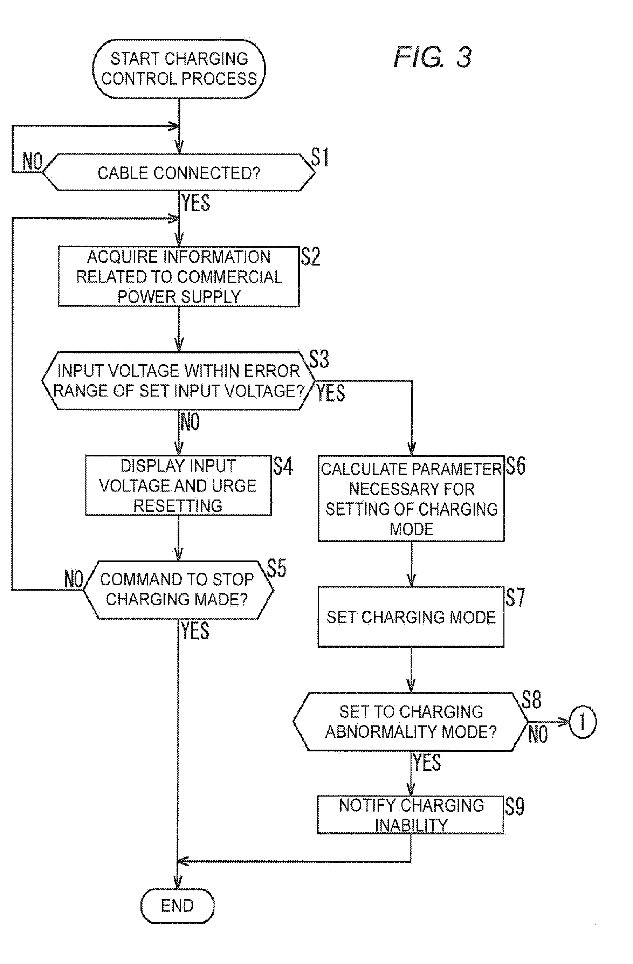

The calculating portion 111 acquires the AC power supply information related to the commercial power supply 12 input by the user from the charging setting IF device 23. As hereinafter described with reference to Fig. 3, and the like, the calculating portion 111 calculates the parameter necessary for the setting of the charging mode indicating the presence of charging of the high voltage battery 26 and the low voltage battery 33, and the order of charging, and notifies the calculation result to the charging control portion 112. Furthermore, if the input voltage indicated in the AC power supply information and the input voltage from the commercial power supply 12 actually do not match, the calculating portion 111 notifies the same to the notifying portion 113.

The charging control portion 112 acquires the command for start and stop of charging of the high voltage battery 26 and the low voltage battery 33 from the charging control trigger 22. The charging control portion 112 acquires the information necessary for charging the high voltage battery 26 and the low voltage battery 33 input by the user (parameter necessary for creating the charging sequence etc.) from the charging setting IF device 23. Furthermore, as hereinafter described with reference to Fig. 3 and the like, the charging control portion 112 controls the presence of output of power, the output voltage, and the output current from the power conversion unit 101 to the high voltage battery 26, as well as, the presence of output of power, the output voltage, and the output current from the power conversion unit 101 to the low voltage battery 33. The charging control portion 112 controls the ON or the OFF of the connection relay 31. Furthermore, the charging control portion 112 performs operation diagnosis or control of the BMU 27, or acquires the information indicating the monitoring result of the high voltage battery 26 from the BMU 27. The charging control portion 112 performs the operation diagnosis of the DCDC converter 29.

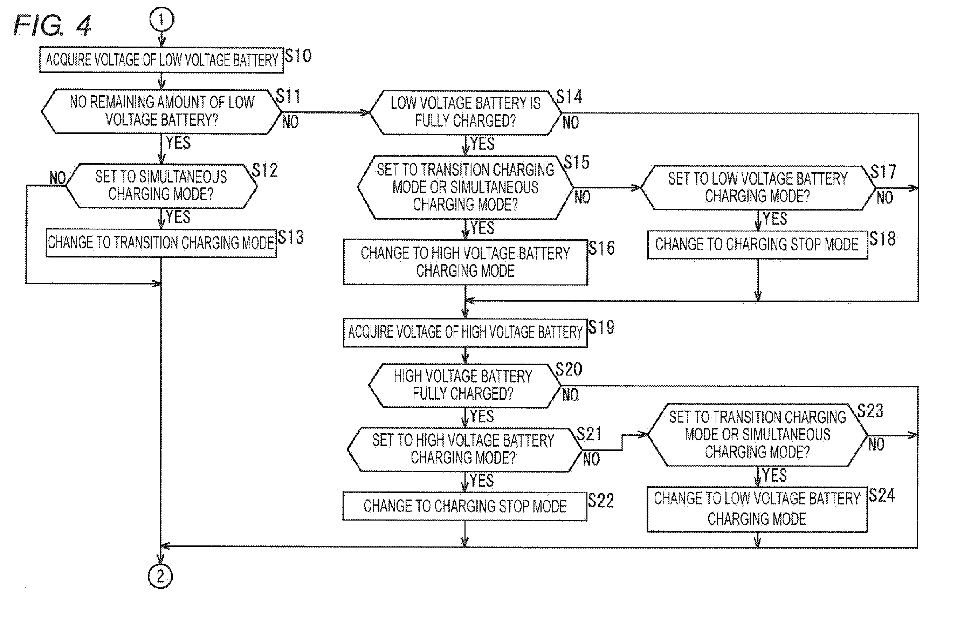

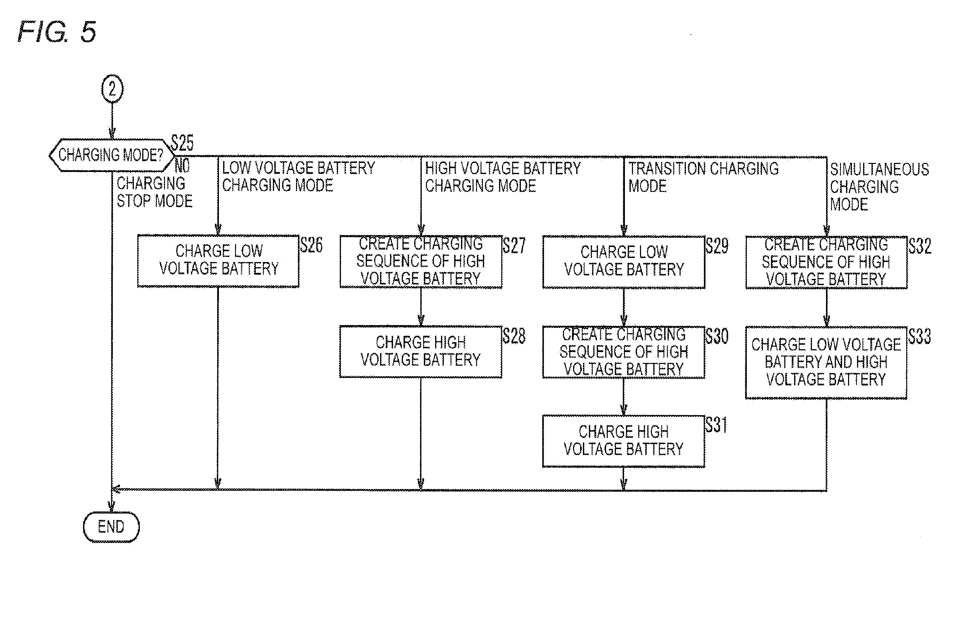

The charging control process executed by the in-vehicle charging system 11 will now be described with reference to the flowcharts of Figs. 3 to 5.

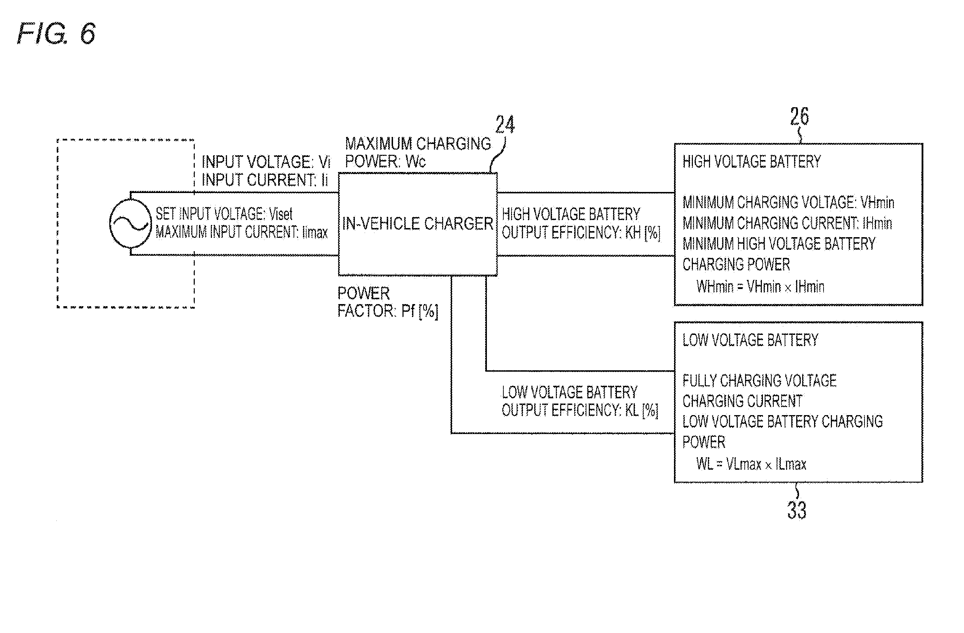

As shown in Fig. 6, the input voltage of the in-vehicle charger 24 is assumed as Vi, the input current as Ii, the set value of the input voltage of the in-vehicle charger 24 (hereinafter also referred to as set input voltage) as Viset, and the set value of the maximum input current as Iimax. The power factor of the in-vehicle charger 24 is assumed as Pf (%), and the maximum charging power as Wc. The output efficiency to the high voltage battery 26 of the in-vehicle charger 24 (hereinafter referred to as high voltage battery output efficiency) is assumed as KH(%), and the output efficiency to the low voltage battery 33 (hereinafter referred to as low voltage battery output efficiency) is assumed as KL(%).

The voltage minimum required for the charging of the high voltage battery 26 (hereinafter referred to as minimum charging voltage) is assumed as VHmin, the current (hereinafter referred to as minimum charging current) as IHmin, and the power (hereinafter referred to as minimum high voltage battery charging power) as WHmin. The WHmin is calculated by the following equation (1).

$$WHmin = VHmin \times IHmin \qquad (1)$$

Furthermore, the full charging voltage of the low voltage battery 33 is assumed as VLmax, the charging current as ILmax, and the charging power (hereinafter referred to as low voltage battery charging power) as WL. The WL is calculated by the following equation (2).

$$WL = VLmax \times ILmax \qquad (2)$$

The minimum charging voltage VHmin, the minimum charging current IHmin, the minimum high voltage battery charging power WHmin, the full charging voltage VLmax, the charging current ILmax, and the low voltage battery charging power WL are set in advance in the in-vehicle charger 24 at the time of product shipment and the like.

Returning back to Fig. 3, the charging control portion 112 determines whether or not the cable is connected in step S1. Specifically, the power conversion unit 101 starts the process of rectifying the input power to the DC power when the power supply port 21 of the in-vehicle charging system 11 and the commercial power supply 12 are connected by way of the cable 13, and the supply of input power from the commercial power supply 12 starts. The power conversion unit 101 starts the process of converting the voltage of the DC power to a predetermined voltage, and supplying the control unit 103. With this, the control unit 103 starts up and the charging control portion 112 determines that the cable is connected, and the process proceeds to step S2.

In step S2, the in-vehicle charging system 11 acquires the information related to the commercial power supply 12. Specifically, the user inputs the AC power supply information related to the commercial power supply 12 through the charging setting IF device 23. The charging setting IF device 23 provides the input AC power supply information to the calculating portion 111 and the charging control portion 112.

In step S3, the calculating portion 111 determines whether or not the input voltage Vi is within an error range of the set input voltage Viset. Specifically, the calculating portion 111 acquires the measurement result of the input voltage Vi of the in-vehicle charger 24 from the measurement unit 102. The calculating portion 111 determines that the input voltage Vi is not within the error range of the set input voltage Viset if a difference between the input voltage Vi measured by the measurement unit 102 and the set input voltage Viset indicated in the AC power supply information exceeds a predetermined error range (e.g., $\pm 15$ V), and the process proceeds to step S4. The error range of the input voltage Vi can be set by the user.

In step S4, the charging setting IF device 23 displays the input voltage Vi, and urges resetting. Specifically, the calculating portion 111 notifies the notifying portion 113 that the input voltage Vi is not within the error range of the set input voltage Viset. The notifying portion 113 displays the current input voltage Vi and the message urging the resetting of the input voltage on the display device arranged in the charging setting IF device 23.

In step S5, the charging control portion 112 determines whether or not a command to stop the charging is made. If determined that the command to stop the charging is not made, the process returns to step S2. Thereafter, the processes of steps S2 to S5 are repeatedly executed until determined that the input voltage Vi is within the error range of the set input voltage Viset in step S3, or determined that the command to stop the charging is made in step 5.

When the command to stop charging is input to the charging control portion 112 through the charging control trigger 22 in step S5, the charging control portion 112 determines that the command to stop the charging is made, and the charging control process is terminated.

If determined that the input voltage Vi is within the error range of the set input voltage Viset in step S3, the process proceeds to step S6.

In step S6, the calculating portion 111 calculates the parameter necessary for the stetting of the charging mode. Specifically, the calculating portion 111 first calculates the maximum charging power Wc of the in-vehicle charger 24 based on the following equation (3).

$$Wc = Viset \times Iiset \times Pf \qquad (3)$$

In other words, the maximum charging power Wc is the effective input power when the input voltage Vi of the in-vehicle charger 24 is the set input voltage Viset, and the input current Ii is the maximum input current Iimax. The power factor Pf may be a fixed value, or may vary depending on at least one of the set input voltage Viset and the maximum input current Iimax. If the power factor Pf is variable, the power factor Pf may be obtained using a relational expression of the power factor Pf and the set input voltage Viset and the maximum input current Iimax, a conversion table, and the like. The power factor Pf may be set using the actual input voltage Vi instead of the set input voltage Viset.

The calculating portion 111 calculates the effective input power (hereinafter referred to as necessary high voltage battery charging power WHd) of the in-vehicle charger 24 necessary for charging the high voltage battery 26 based on the following equation (4).

$$WHd = WHmin \div KH \qquad (4)$$

The high voltage battery output efficiency KH may be a fixed value, or may vary depending on at least one of the set input voltage Viset and the maximum input current Iimax. If the high voltage battery output efficiency KH is variable, the high voltage battery output efficiency KH may be obtained using a relational expression of the high voltage battery output efficiency KH and the set input voltage Viset and the maximum input current Iimax, a conversion table, and the like. The high voltage battery output efficiency KH may be set using the actual input voltage Vi instead of the set input voltage Viset.

Furthermore, the calculating portion 111 calculates the effective input power the in-vehicle charger 24 necessary for charging the low voltage battery 33 (hereinafter referred to as necessary low voltage battery charging power WLd) based on the following equation (5).

$$WLd = WL \div KL \qquad (6)$$

The low voltage battery output efficiency KL may be a fixed value, or may vary depending on at least one of the set input voltage Viset and the maximum input current Iimax. If the low voltage battery output efficiency KL is variable, the low voltage battery output efficiency KL may be obtained using a relational expression of the low voltage battery output efficiency KL and the set input voltage Viset and the maximum input current Iimax, a conversion table, and the like. The low voltage battery output efficiency KL may be set using the actual input voltage Vi instead of the set input voltage Viset.

The calculating portion 111 notifies the calculated maximum charging power Wc, the necessary high voltage battery charging power WHd, and the necessary low voltage battery charging power WLd to the charging control portion 112.

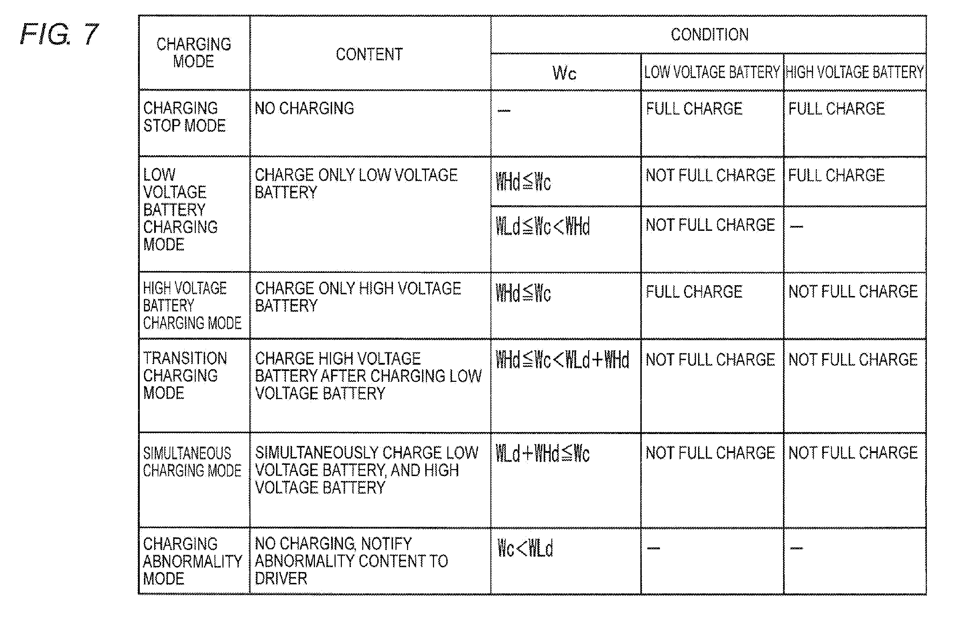

In step S7, the charging control portion 112 sets the charging mode. A specific example of a method of setting the charging mode will now be described with reference to Fig. 7.

Fig. 7 shows one example of a determination table used for the setting of the charging mode. In this case, the charging mode is classified into six types of charging stop mode, low voltage battery charging mode, high voltage battery charging mode, transition charging mode, simultaneous charging mode, and charging abnormality mode.

The charging stop mode is a mode in which the high voltage battery 26 and the low voltage battery 33 are not charged.

The low voltage battery charging mode is a mode in which the high voltage battery 26 is not charged, and only the low voltage battery 33 is charged.

The high voltage battery charging mode is a mode in which the low voltage battery 33 is not charged, and only the high voltage battery 26 is charged.

The transition charging mode is a mode of charging the high voltage battery 26 after charging the low voltage battery 33.

The simultaneous charging mode is a mode of simultaneously charging the high voltage battery 26 and the low voltage battery 33.

The charging abnormality mode is a mode in which the charging is not performed as abnormality occurred.

The charging control portion 112 sets to the charging abnormality mode when maximum charging power Wc < necessary low voltage battery charging power WLd, that is, when the power necessary for charging the low voltage battery 33 cannot be covered with the commercial power supply 12.

The charging control portion 112 sets to the low voltage battery charging mode when the necessary low voltage battery charging power WLd ≤ maximum charging power Wc < necessary high voltage battery charging power WHd, that is, when the power necessary for charging the low voltage battery 33 can be covered but the power necessary for charging the high voltage battery 26 cannot be covered with the commercial power supply 12.

Furthermore, the charging control portion 112 sets to the transition charging mode when the necessary high voltage battery charging power WHd ≤ maximum charging power Wc < necessary low voltage battery charging power WLd + necessary high voltage battery charging power WHd, that is, when the power necessary for charging either the high voltage battery 26 or the low voltage battery 33 can be covered but the power necessary for simultaneously charging the high voltage battery 26 and the low voltage battery 33 cannot be covered with the commercial power supply 12.

The charging control portion 112 sets to the simultaneous charging mode when the maximum charging power Wc ≥ necessary low voltage battery charging power WLd + necessary high voltage battery charging power WHd, that is, when the power for simultaneously charging the high voltage battery 26 and the low voltage battery 33 can be covered with the commercial power supply 12.

In step S8, the charging control portion 112 determines whether or not the charging abnormality mode is set. The process proceeds to step S9 if determined that the charging abnormality mode is set.

In step S9, the charging setting IF device 23 notifies no-charging. Specifically, the charging control portion 112 notifies the notifying portion 113 that the high voltage battery 26 and the low voltage battery 33 cannot be charged. The notifying portion 113 displays a screen notifying that the high voltage battery 26 and the low voltage battery 33 cannot be charged on a display device arranged in the charging setting IF device 23. The charging control process is thereafter terminated.

If determined that the charging abnormality mode is not set in step S8, the process proceeds to step S10.

In step S10, the charging control portion 112 acquires the voltage of the low voltage battery 33. Specifically, the charging control portion 112 turns ON the connection relay 31. The voltage of the low voltage battery 33 is thereby applied to the output side of the power conversion unit 101, and the voltage of the low voltage battery 33 applied to the power conversion unit 101 is measured by the measurement unit 102. The charging control portion 112 acquires the measurement result of the voltage of the low voltage battery 33 from the measurement unit 102. The charging control portion 112 thereafter turns OFF the connection relay 31.

In step S11, the charging control portion 112 determines whether or not the low voltage battery 33 has no remaining amount based on the voltage of the low voltage battery 33. The process proceeds to step S12 if determined that the low voltage battery 33 has no remaining amount (i.e., the low voltage battery 33 is running out).

In step S12, the charging control portion 112 determines whether or not the simultaneous charging mode is set. The process proceeds to step S13 if determined that the simultaneous charging mode is set.

In step S13, the charging control portion 112 changes to the transition charging mode. In other words, in the current state, the low voltage battery 33 has no remaining amount, the BMU 27 and the like do not operate, and the charging of the high voltage battery 26 cannot be performed, and thus the charging mode is changed to charge the high voltage battery 26 after charging the low voltage battery 33. The process thereafter proceeds to step S25.

If determined that the simultaneous charging mode is not set in step S12, the process of step S13 is skipped and the process proceeds to step S25.

If determined that the low voltage battery 33 has no remaining amount in step S11, the process proceeds to step S14.

In step S14, the charging control portion 112 determines whether or not the low voltage battery 33 is fully charged. The process proceeds to step S15 if determined that the low voltage battery 33 is fully charged.

In step S15, the charging control portion 112 determines whether or not the transition charging mode or the simultaneous charging mode is set. The process proceeds to step S16 if determined that the transition charging mode or the simultaneous charging mode is set.

In step S16, the charging control portion 112 changes to the high voltage battery charging mode. In other words, since the low voltage battery 33 is fully charged and does not need to be charged, the charging mode is changed to change only the high voltage battery 26. The process then proceeds to step S19.

The process proceeds to step S17 if determined that the transition charging mode or the simultaneous charging mode is not set in step S15.

In step S17, the charging control portion 112 determines whether or not the low voltage battery charging mode is set. The process proceeds to step S18 if determined that the low voltage battery charging mode is set.

In step S18, the charging control portion 112 changes to the charging stop mode. In other words, since the low voltage battery 33 is fully charged and does not need to be charged, and the high voltage battery 26 cannot be charged with the current commercial power supply 12, the charging mode is changed so as not to be charged. Thereafter, the process proceeds to step S19.

If determined that the low voltage battery charging mode is not set in step S17, the process of step S18 is skipped and the process proceeds to step S19.

If determined that the low voltage battery 33 is not fully charged in step S14, the processes of steps S15 to S18 are skipped, and the process proceeds to step S19.

In step S19, the charging control portion 112 acquires the voltage of the high voltage battery 26 from the BMU 27.

In step S20, the charging control portion 112 determines whether or not the high voltage battery 26 is fully charged based on the voltage of the high voltage battery 26. The process proceeds to step S21 if determined that the high voltage battery 26 is fully charged.

In step S21, the charging control portion 112 determines whether or not the high voltage battery charging mode is set. The process proceeds to step S22 if determined that the high voltage battery charging mode is set.

In step S22, the charging control portion 112 changes to the charging stop mode. In other words, since the high voltage battery 26 and the low voltage battery 33 are both fully charged and do not need to be charged, the charging mode is set so as not to are charged. The process thereafter proceeds to step S25.

The process proceeds to step S23 if determined that the high voltage battery charging mode is not set in step S21.

In step S23, the charging control portion 112 determines whether or not the transition charging mode or the simultaneous charging mode is set. The process proceeds to step S24 if determined that the transition charging mode or the simultaneous charging mode is set.

In step S24, the charging control portion 112 changes to the low voltage battery charging mode. In other words, the charging mode is changed to perform only the charging of the low voltage battery 33 since the high voltage battery 26 is fully charged and does not need to be charged. The process thereafter proceeds to step S25.

If determined that the transition charging mode or the simultaneous charging mode is not set in step S23, the process of step S24 is skipped and the process proceeds to step S25.

If determined that the high voltage battery 26 is not fully charged in step S20, the processes of steps S21 to S24 are skipped, and the process proceeds to step S25.

In step S25, the charging control portion 112 determines the charging mode. If determined that the charging stop mode is set, the charging of the high voltage battery 26 and the low voltage battery 33 is not performed, and the charging control process is terminated,

The process proceeds to step S26 if determined that the low voltage battery charging mode is set in step S25.

In step S26, the in-vehicle charger 24 charges the low voltage battery 33. Specifically, the charging control portion 112 turns ON the connection relay 31 on the low voltage battery 33 side. The power conversion unit 101 supplies power to the low voltage battery 33 through the connection relay 31 and the diode 32 to charge the low voltage battery 33 while controlling the charging voltage and the charging current based on the control of the charging control portion 112. If overload occurs by the operation of the ECU 14 and the like while charging the low voltage battery 33, the charging control portion 112 controls the charging voltage to lower while maintaining the charging current at ILmax. The power conversion unit 101 stops the supply of power to the low voltage battery 33 and the charging control portion 112 turns OFF the connection relay 31 when the low voltage battery 33 is fully charged. The charging control process is thereafter terminated.

The process proceeds to step S27 if determined that the high voltage battery charging mode is set in step S25.

In step S27, the charging control portion 112 creates a charging sequence of the high voltage battery 26. For instance, the charging control portion 112 creates the charging sequence so that the charging of the high voltage battery 26 is performed in the order of soft start charging, constant current charging, constant power charging, and constant voltage charging.

The soft start charging is a charging method for preventing the incoming current from flowing at the start of the charging, where charging of the high voltage battery 26 is performed by gradually raising the charging voltage and the charging current. The soft start charging is terminated and the constant current charging is started when the charging current reaches the maximum charging current of the high voltage battery 26.

During the constant current charging, the charging voltage is controlled to maintain the charging current constant. The constant current charging is terminated and the constant power charging is started when the charging voltage gradually rises, and the output power of the in-vehicle charger 24 reaches the maximum value of the power that can be output.

During the constant power charging, control is performed to raise the charging voltage and lower the charging current while maintaining the charging power constant. The constant power charging is terminated and the constant voltage charging is started when the charging voltage reaches the fully charging voltage of the high voltage battery 26.

During the constant voltage charging, the charging is carried out with the charging voltage maintained constant. The charging of the high voltage battery 26 is terminated when the charging current gradually lowers and becomes smaller than the charging termination current set in advance.

The charging sequence of the high voltage battery 26 is not limited to the transition described above.

In step S28, the in-vehicle charger 24 charges the high voltage battery 26. Specifically, the BMU 27 turns ON the connection relay 25 on the high voltage battery 26 side based on the control of the charging control portion 112. The power conversion unit 101 supplies power to the high voltage battery 26 through the connection relay 25 to charge the high voltage battery 26 while controlling the charging voltage and the charging current according to the charging sequence based on the control of the charging control portion 112. The power conversion unit 101 stops the supply of power to the high voltage battery 26, and the BMU 27 turns OFF the connection relay 25 based on the control of the charging control portion 112 when the high voltage battery 26 is fully charged. The charging control process is thereafter terminated.

The process proceeds to step S29 if determined that the transition charging mode is set in step S25.

The low voltage battery 33 is charged in step S29, similar to the process of step S26, the charging sequence of the high voltage battery 26 is created in step S30, similar to the process of step S27, and then the high voltage battery 26 is charged similar to the process of step S31. The charging control process is thereafter terminated.

In this case, the charging sequence of the high voltage battery 26 may be created while charging the low voltage battery 33, or the charging sequence of the high voltage battery 26 may be created before charging the low voltage battery 33.

Furthermore, the process proceeds to step S32 if determined that the simultaneous charging mode is set in step S25.

In step S32, the charging sequence of the high voltage battery 26 is created, similar to the process of step S27.

In step S33, the in-vehicle charger 24 charges the low voltage battery 33 and the high voltage battery 26 by the processes similar to step S26 and step S28. In this case, the charging sequence may be created after starting the charging of the low voltage battery 33 and then the charging of the high voltage battery 26 may be started, or the charging of the low voltage battery 33 and the high voltage battery 26 may be started after creating the charging sequence. If the charging of the low voltage battery 33 is terminated first, the charging sequence is updated, and the power used in the charging of the low voltage battery 33 is assigned to the charging of the high voltage battery 26. The charging control process is terminated when the charging of the low voltage battery 33 and the high voltage battery 26 is terminated.

The charging of the high voltage battery 26 and the low voltage battery 33 is performed in the above manner so that the input current Ii does not exceed the maximum input current Iimax set in advance. This prevents an excessive current from flowing from the commercial power supply 12 to the in-vehicle charger 24 thereby greatly lowering the voltage output from another outlet, the breaker from operating thereby stopping the supply of power from the commercial power supply 12 and adversely affecting other electrical products, or the charging of the high voltage battery 26 and the low voltage battery 33 from stopping.

Since the charging control is performed by applying the power factor Pf, the high voltage battery output efficiency KH, and the low voltage battery output efficiency KL of the in-vehicle charger 24, the input current Ii is reliably prevented from exceeding the maximum input current Iimax. Furthermore, the high voltage battery 26 and the low voltage battery 33 can be more rapidly charged within a range of the set input voltage Viset and the maximum input current Iimax, which are set.

The series of processes of the control unit 103 may be executed by hardware.

The program executed by the control unit 103 may be a program in which the processes are performed in time-series along the order described in the specification, or may be a program in which the processes are performed in parallel or at the necessary timing when called out.

It is to be noted that the terms of the system in the specification refer to the overall device configured by a plurality of devices, means, and the like.

The embodiments of the present invention should not be limited to the embodiments described above, and various modifications may be made within a scope not deviating from the gist of the invention.

In accordance with one aspect of the present invention, there is provided a charging control device for controlling a charging device including a power conversion unit for converting an AC power supplied from an AC power supply to a DC charging power and simultaneously supplying a first battery, which is a power source of a vehicle, and a second battery, which has a capacity smaller than the first battery and which supplies power to electrical components arranged in the vehicle, and includes a calculating portion for calculating a maximum charging power or an upper limit of the charging power based on an input voltage input from the AC power supply to the power conversion unit and a maximum input current or an upper limit of an input current input from the AC power supply to the power conversion unit; and a charging control portion for controlling presence of charging and a charging order of the first battery and the second battery based on the maximum charging power, a first necessary power or power necessary for charging the first battery, and a second necessary power or power necessary for charging the second battery.

In the charging control device of the first aspect of the present invention, the maximum charging power or the upper limit of the charging power is calculated based on the input voltage input from the AC power supply to the power conversion unit and the maximum input current or the upper limit of the input current input from the AC power supply to the power conversion unit, and the presence of charging and the charging order of the first battery and the second battery are controlled based on the maximum charging power, the first necessary power or power necessary for charging the first battery, and the second necessary power or power necessary for charging the second battery.

Therefore, the first battery and the second battery can be more appropriately charged according to the state of the AC power supply.

The charging device is configured by a charging device of the battery of the electric vehicle. The power conversion unit is configured by a rectifier, a DCDC converter, and the like. The calculating portion and the charging control portion are configured by a CPU (Central Processing Unit), an ECU (Electronic Control Unit), and the like.

The calculating portion calculates the first necessary power and the second necessary power using a first output efficiency to the first battery and a second output efficiency to the second battery of the power conversion unit with respect to at least one of the input voltage or the maximum input current, and the charging control portion controls the presence of charging as well as the charging order of the first battery and the second battery based on the first necessary power and the second necessary power calculated by the calculating portion.

Therefore, the first battery and the second battery can be more appropriately charged according to the state of the AC power supply.

The charging control portion performs the control not to charge the first battery and the second battery if the maximum charging power is smaller than the second necessary power, to charge only the second battery if the maximum charging power is greater than or equal to the second necessary power and smaller than the first necessary power, to charge the first battery and the second battery in the order of the second battery and the first battery if the maximum charging power is greater than or equal to the first necessary power and smaller than a sum of the first necessary power and the second necessary power, and to simultaneously charge the first battery and the second battery if the maximum charging power is greater than or equal to the sum of the first necessary power and the second necessary power.

The selection and the order of the battery to be charged can be appropriately set according to the state of the AC power supply, and the battery can be more appropriately and rapidly charged.

The charging control portion performs the control not to charge the first battery if the first battery is fully charged, and not to charge the second battery if the second battery is fully charged.

The battery to be charged thus can be selected according to the charging state of the battery, and the battery can be more appropriately and rapidly charged.

In accordance with another aspect of the present invention, there is provided a charging method including the step in which a charging control device, for controlling a charging device including a power conversion unit for converting an AC power supplied from an AC power supply to a DC charging power and simultaneously supplying a first battery, which is a power source of a vehicle, and a second battery, which has a capacity smaller than the first battery and which supplies power to electrical components arranged in the vehicle, calculates a maximum charging power or an upper limit of the charging power based on an input voltage input from the AC power supply to the power conversion unit and a maximum input current or an upper limit of an input current input from the AC power supply to the power conversion unit; and controls presence of charging and a charging order of the first battery and the second battery based on the maximum charging power, a first necessary power or power necessary for charging the first battery, and a second necessary power or power necessary for charging the second battery.

In the charging method of another aspect of the present invention, the maximum charging power or the upper limit of the charging power is calculated based on the input voltage input from the AC power supply to the power conversion unit and the maximum input current or the upper limit of the input current input from the AC power supply to the power conversion unit, and the presence of charging and the charging order of the first battery and the second battery are controlled based on the maximum charging power, the first necessary power or power necessary for charging the first battery, and the second necessary power or power necessary for charging the second battery.

Therefore, the first battery and the second battery can be more appropriately charged according to the state of the AC power supply.

The charging device is configured by a charging device of the battery of the electric vehicle. The power conversion unit is configured by a rectifier, a DCDC converter, and the like. The charging control device is configured by a CPU (Central Processing Unit), an ECU (Electronic Control Unit), and the like.

In accordance with still another aspect of the present invention, there is provided a program causing a computer, for controlling a charging device including a power conversion unit for converting an AC power supplied from an AC power supply to a DC charging power and simultaneously supplying a first battery, which is a power source of a vehicle, and a second battery, which has a capacity smaller than the first battery and which supplies power to electrical components arranged in the vehicle, to execute a process including the steps of: calculating a maximum charging power or an upper limit of the charging power based on an input voltage input from the AC power supply to the power conversion unit and a maximum input current or an upper limit of an input current input from the AC power supply to the power conversion unit: and controlling presence of charging and a charging order of the first battery and the second battery based on the maximum charging power, a first necessary power or power necessary for charging the first battery, and a second necessary power or power necessary for charging the second battery.

In the computer for executing the program of the first aspect of the present invention, the maximum charging power or the upper limit of the charging power is calculated based on the input voltage input from the AC power supply to the power conversion unit and the maximum input current or the upper limit of the input current input from the AC power supply to the power conversion unit, and the presence of charging and the charging order of the first battery and the second battery are controlled based on the maximum charging power, the first necessary power or power necessary for charging the first battery, and the second necessary power or power necessary for charging the second battery.

Therefore, the first battery and the second battery can be more appropriately charged according to the state of the AC power supply.

The charging device is configured by a charging device of the battery of the electric vehicle. The power conversion unit is configured by a rectifier, a DCDC converter, and the like.

In accordance with still further aspect of the present invention, there is provided a charging including: a power conversion unit for converting an AC power supplied from an AC power supply to a DC charging power and simultaneously supplying a first battery, which is a power source of a vehicle, and a second battery, which has a capacity smaller than the first battery and which supplies power to electrical components arranged in the vehicle; a calculating portion for calculating a maximum charging power or an upper limit of the charging power based on an input voltage input from the AC power supply to the power conversion unit and a maximum input current or an upper limit of an input current input from the AC power supply to the power conversion unit; and a charging control portion for controlling presence of charging and a charging order of the first battery and the second battery based on the maximum charging power, a first necessary power or power necessary for charging the first battery, and a second necessary power or power necessary for charging the second battery.

In the charging device of the second aspect of the present invention, the maximum charging power or the upper limit of the charging power is calculated based on the input voltage input from the AC power supply to the power conversion unit and the maximum input current or the upper limit of the input current input from the AC power supply to the power conversion unit, and the presence of charging and the charging order of the first battery and the second battery are controlled based on the maximum charging power, the first necessary power or power necessary for charging the first battery, and the second necessary power or power necessary for charging the second battery.

Therefore, the first battery and the second battery can be more appropriately charged according to the state of the AC power supply.

The power conversion unit is configured by a rectifier, a DCDC converter, and the like. The calculating portion and the charging control portion are configured by a CPU (Central Processing Unit), an ECU (Electronic Control Unit), and the like. [0138]According to the first and second aspects of the present invention, the first battery or the power source of the vehicle, and the second battery for supplying power to the electrical components arranged in the vehicle can be charged. In particular, according to the first and second aspects of the present invention, the first battery and the second battery can be more appropriately charged according to the state of the AC power supply.

## Claims

1.   A charging control device for controlling a charging device including a power conversion unit (101) for converting an AC power supplied from an AC power supply (12) to a DC charging power and simultaneously supplying a first battery, which is a power source of a vehicle, and a second battery, which has a capacity smaller than the first battery and which supplies power to electrical components arranged in the vehicle; the charging control device comprising:

   a calculating portion (111) for calculating a maximum charging power or an upper limit of the charging power based on an input voltage input from the AC power supply (12) to the power conversion unit (101) and a maximum input current or an upper limit of an input current input from the AC power supply (12) to the power conversion unit (101); and
   a charging control portion (112) for controlling presence of charging and a charging order of the first battery and the second battery based on the maximum charging power, a first necessary power or power necessary for charging the first battery, and a second necessary power or power necessary for charging the second battery.

2.   The charging control device according to claim 1, **characterized in that**
   the calculating portion (111) calculates the first necessary power and the second necessary power using a first output efficiency to the first battery and a second output efficiency to the second battery of the power conversion unit (101) with respect to at least one of the input voltage or the maximum input current; and
   the charging control portion (112) controls the presence of charging as well as the charging order of the first battery and the second battery based on the first necessary power and the second necessary power calculated by the calculating portion (111).

3.   The charging control device according to claim 1, **characterized in that**
   the charging control portion (112) performs the control not to charge the first battery and the second battery if the maximum charging power is smaller than the second necessary power, to charge only the second battery if the maximum charging power is greater than or equal to the second necessary power and smaller than the first necessary power, to charge the first battery and the second battery in the order of the second battery and the first battery if the maximum charging power is greater than or equal to the first necessary power and smaller than a sum of the first necessary power and the second necessary power, and to simultaneously charge the first battery and the second battery if the maximum charging power is greater than or equal to the sum of the first necessary power and the second necessary power.

4. The charging control device according to claim 3, **characterized in that**
the charging control portion (112) performs the control not to charge the first battery if the first battery is fully charged, and not to charge the second battery if the second battery is fully charged.

5. A charging control method comprising the step in which a charging control device, for controlling a charging device including a power conversion unit (101) for converting an AC power supplied from an AC power supply (12) to a DC charging power and simultaneously supplying a first battery, which is a power source of a vehicle, and a second battery, which has a capacity smaller than the first battery and which supplies power to electrical components arranged in the vehicle,
calculates a maximum charging power or an upper limit of the charging power based on an input voltage input from the AC power supply (12) to the power conversion unit (101) and a maximum input current or an upper limit of an input current input from the AC power supply (12) to the power conversion unit (101); and
controls presence of charging and a charging order of the first battery and the second battery based on the maximum charging power, a first necessary power or power necessary for charging the first battery, and a second necessary power or power necessary for charging the second battery.

6. A program for causing a computer, for controlling a charging device including a power conversion unit (101) for converting an AC power supplied from an AC power supply (12) to a DC charging power and simultaneously supplying a first battery, which is a power source of a vehicle, and a second battery, which has a capacity smaller than the first battery and which supplies power to electrical components arranged in the vehicle, to execute a process comprising the steps of:

calculating a maximum charging power or an upper limit of the charging power based on an input voltage input from the AC power supply (12) to the power conversion unit (101) and a maximum input current or an upper limit of an input current input from the AC power supply (12) to the power conversion unit (101); and
controlling presence of charging and a charging order of the first battery and the second battery based on the maximum charging power, a first necessary power or power necessary for charging the first battery, and a second necessary power or power necessary for charging the second battery.

7. A charging device comprising:

a power conversion unit (101) for converting an AC power supplied from an AC power supply (12) to a DC charging power and simultaneously supplying a first battery, which is a power source of a vehicle, and a second battery, which has a capacity smaller than the first battery and which supplies power to electrical components arranged in the vehicle;
a calculating portion (111) for calculating a maximum charging power or an upper limit of the charging power based on an input voltage input from the AC power supply (12) to the power conversion unit (101) and a maximum input current or an upper limit of an input current input from the AC power supply (12) to the power conversion unit (101); and
a charging control portion (112) for controlling presence of charging and a charging order of the first battery and the second battery based on the maximum charging power, a first necessary power or power necessary for charging the first battery, and a second necessary power or power necessary for charging the second battery.

# FIG. 1

EP 2 228 882 A2

*FIG. 2*

POWER SUPPLY PORT ~21

IN-VEHICLE CHARGER ~24

25

31

101
POWER CONVERSION UNIT

MEASUREMENT UNIT ~102

112

CALCULATING PORTION
111

CHARGING CONTROL PORTION

CHARGING CONTROL TRIGGER ~22

BMU ~27

NOTIFYING PORTION
113

DCDC CONVERTER ~29

CONTROL UNIT
103

CHARGING DEVICE IF DEVICE ~23

EP 2 228 882 A2

*FIG. 3*

START CHARGING
CONTROL PROCESS

NO — CABLE CONNECTED? S1

YES

ACQUIRE INFORMATION
RELATED TO COMMERCIAL
POWER SUPPLY S2

INPUT VOLTAGE WITHIN ERROR
RANGE OF SET INPUT VOLTAGE? S3 — YES

NO

DISPLAY INPUT
VOLTAGE AND URGE
RESETTING S4

CALCULATE PARAMETER
NECESSARY FOR
SETTING OF CHARGING
MODE S6

NO — COMMAND TO STOP
CHARGING MADE? S5

SET CHARGING MODE S7

YES

SET TO CHARGING
ABNORMALITY MODE? S8 — NO ①

YES

NOTIFY CHARGING
INABILITY S9

END

15

*FIG. 4*

① 

ACQUIRE VOLTAGE OF LOW VOLTAGE BATTERY $S10$

NO REMAINING AMOUNT OF LOW VOLTAGE BATTERY? $S11$ — NO → LOW VOLTAGE BATTERY IS FULLY CHARGED? $S14$ — NO →

↓YES

SET TO SIMULTANEOUS CHARGING MODE? $S12$ — NO

↓YES

CHANGE TO TRANSITION CHARGING MODE $S13$

↓YES

SET TO TRANSITION CHARGING MODE OR SIMULTANEOUS CHARGING MODE? $S15$ — NO → SET TO LOW VOLTAGE BATTERY CHARGING MODE? $S17$ — NO →

↓YES

CHANGE TO HIGH VOLTAGE BATTERY CHARGING MODE $S16$

↓YES

CHANGE TO CHARGING STOP MODE $S18$

ACQUIRE VOLTAGE OF HIGH VOLTAGE BATTERY $S19$

HIGH VOLTAGE BATTERY FULLY CHARGED? $S20$ — NO →

↓YES

SET TO HIGH VOLTAGE BATTERY CHARGING MODE? $S21$ — NO → SET TO TRANSITION CHARGING MODE OR SIMULTANEOUS CHARGING MODE? $S23$ — NO →

↓YES

CHANGE TO CHARGING STOP MODE $S22$

↓YES

CHANGE TO LOW VOLTAGE BATTERY CHARGING MODE $S24$

②

EP 2 228 882 A2

16

## FIG. 5

②

CHARGING MODE? — S25

**CHARGING STOP MODE** (NO)

**LOW VOLTAGE BATTERY CHARGING MODE**

**HIGH VOLTAGE BATTERY CHARGING MODE**

**TRANSITION CHARGING MODE**

**SIMULTANEOUS CHARGING MODE**

CHARGE LOW VOLTAGE BATTERY — S26

CREATE CHARGING SEQUENCE OF HIGH VOLTAGE BATTERY — S27

CHARGE LOW VOLTAGE BATTERY — S29

CREATE CHARGING SEQUENCE OF HIGH VOLTAGE BATTERY — S32

CHARGE HIGH VOLTAGE BATTERY — S28

CREATE CHARGING SEQUENCE OF HIGH VOLTAGE BATTERY — S30

CHARGE LOW VOLTAGE BATTERY AND HIGH VOLTAGE BATTERY — S33

CHARGE HIGH VOLTAGE BATTERY — S31

END

EP 2 228 882 A2

FIG. 6

INPUT VOLTAGE: Vi
INPUT CURRENT: Ii

MAXIMUM CHARGING
POWER: Wc

24

SET INPUT VOLTAGE: Viset
MAXIMUM INPUT CURRENT: Iimax

IN-VEHICLE CHARGER

POWER
FACTOR: Pf [%]

HIGH VOLTAGE BATTERY
OUTPUT EFFICIENCY: KH [%]

LOW VOLTAGE BATTERY
OUTPUT EFFICIENCY: KL [%]

26

HIGH VOLTAGE BATTERY

MINIMUM CHARGING VOLTAGE: VHmin
MINIMUM CHARGING CURRENT: IHmin
MINIMUM HIGH VOLTAGE BATTERY
CHARGING POWER
    $WHmin = VHmin \times IHmin$

LOW VOLTAGE BATTERY

FULLY CHARGING VOLTAGE
CHARGING CURRENT
LOW VOLTAGE BATTERY CHARGING
POWER
    $WL = VLmax \times ILmax$

33

EP 2 228 882 A2

*FIG. 7*

| CHARGING MODE | CONTENT | CONDITION | | |
|---|---|---|---|---|
| | | Wc | LOW VOLTAGE BATTERY | HIGH VOLTAGE BATTERY |
| CHARGING STOP MODE | NO CHARGING | — | FULL CHARGE | FULL CHARGE |
| LOW VOLTAGE BATTERY CHARGING MODE | CHARGE ONLY LOW VOLTAGE BATTERY | $WHd \leqq Wc$ | NOT FULL CHARGE | FULL CHARGE |
| | | $WLd \leqq Wc < WHd$ | NOT FULL CHARGE | — |
| HIGH VOLTAGE BATTERY CHARGING MODE | CHARGE ONLY HIGH VOLTAGE BATTERY | $WHd \leqq Wc$ | FULL CHARGE | NOT FULL CHARGE |
| TRANSITION CHARGING MODE | CHARGE HIGH VOLTAGE BATTERY AFTER CHARGING LOW VOLTAGE BATTERY | $WHd \leqq Wc < WLd + WHd$ | NOT FULL CHARGE | NOT FULL CHARGE |
| SIMULTANEOUS CHARGING MODE | SIMULTANEOUSLY CHARGE LOW VOLTAGE BATTERY, AND HIGH VOLTAGE BATTERY | $WLd + WHd \leqq Wc$ | NOT FULL CHARGE | NOT FULL CHARGE |
| CHARGING ABNORMALITY MODE | NO CHARGING, NOTIFY ABNORMALITY CONTENT TO DRIVER | $Wc < WLd$ | — | — |

EP 2 228 882 A2

**EP 2 228 882 A2**

**REFERENCES CITED IN THE DESCRIPTION**

**Patent documents cited in the description**

- JP 7015807 A